# EUROPEAN PATENT SPECIFICATION

(11) **EP 4 361 960 B1**
(45) Date of publication and mention of the grant of the patent: **04.03.2026**
(21) Application number: 23203952.9
(22) Date of filing: 17.10.2023
(51) Int. Cl.: G06V 10/50, G06V 10/774

(54) **ANNOTATION DEVICE AND ANNOTATION METHOD**
ANNOTATIONSVORRICHTUNG UND ANNOTATIONSVERFAHREN
DISPOSITIF D'ANNOTATION ET PROCÉDÉ D'ANNOTATION

(30) Priority: 25.10.2022 KR 20220138517
(43) Date of publication of application: 01.05.2024
(73) Proprietor: Doosan Enerbility Co., Ltd., Seongsan-gu Changwon-si, Gyeongsangnam-do 51711 (KR)
(72) Inventor: Yu, Jun Sang, Seongnam-si (KR); Lee, Jung Min, Seoul (KR)
(74) Representative: Ter Meer Steinmeister & Partner

(56) References cited:
- CN-A- 107 886 512
- CN-A- 110 189 309

## Description

### FIELD

Various embodiments relate to an annotation device and an annotation method.

### BACKGROUND

In a field of deep learning related to images or videos, various deep learning technologies are being developed in order to detect the type and position of a meaningful object present in the image or video. Generally, in order to perform machine learning for the purpose of building a deep learning model, an annotation operation must be necessarily performed in advance.

The annotation operation refers to an operation of tagging label information for each data in order to generate learning data. The annotation operation is typically conducted by humans, which leads to substantial cost in terms of both human effort and time in generating a large amount of learning data.
CN 107 886512 A discloses a method for determining a training sample, comprising determining a target image to be annotated, segmenting the target image into a plurality of superpixel blocks through a superpixel segmentation algorithm, on the basis of each divided superpixel block, annotating an annotation object in the target image, and determining the training sample according to the annotated target image.
CN 110 189 309 A discloses a method for processing an image, comprising obtaining a to-be-processed collection image; determining the first uncertainty estimate of the collected image based on the prediction results of the pixel points representing the area to be marked in the collected image; determining a second uncertainty estimate of the collected image based on the characteristic image of the collected image; and based on the first uncertainty estimate and the second uncertainty estimate, obtain a recommended annotation area in the collected image that represents the area to be annotated.

### SUMMARY

The purpose of the present disclosure is to provide an annotation device capable of adaptively generating a superpixel by using a non-parametric inference-based superpixel segmentation technology and of recommending an annotation area even when there are few or many objects in an image, and such annotation method. The technical problem is solved by the subject-matter of the independent claims.

According to one aspect, an annotation device includes: at least one processor and memory configured to store a program. The at least one processor, when executing instructions in the program, is configured to generate a plurality of superpixels in an annotation target image based on a predetermined non-parametric segmentation method, to recommend segmentation regions based on outlines of the plurality of superpixels, respectively, and to perform labeling for each of the recommended segmentation regions based on a user input for labeling. By the program stored in the memory, the processor may be configured to perform an annotation method according to any one of the herein described aspects and embodiments. The annotation device may be a computer.

According to a further aspect, an annotation method includes: generating a plurality of superpixels in an annotation target image based on a predetermined non-parametric segmentation method; recommending segmentation regions based on outlines of the plurality of superpixels, respectively; and performing labeling for each of the recommended segmentation regions based on a user input for labeling.

According to a further aspect, a recording medium that is readable by a computer or the processor and in which a program for performing the method according to any one of the herein described aspects and embodiments of the annotation method is recorded.

The at least one processor is configured to select, based on a user input for superpixel selection, at least one superpixel of the plurality of generated superpixels as an additional division target superpixel. The at least one processor may be configured to create a plurality of clusters by clustering pixels within the selected additional division target superpixel based on a predetermined hierarchical/non-parametric coordinate clustering algorithm. The at least one processor may be configured to generate, based on the plurality of clusters, new superpixels by dividing the selected additional division target superpixel into at least two superpixels, thereby updating the plurality of superpixels to include the new superpixels.

The generating superpixels in an annotation target image includes: selecting, based on a user input for superpixel selection, at least one superpixel of the plurality of generated superpixels as an additional division target superpixel, generating (i.e. creating) a plurality of clusters by clustering pixels within the selected additional division target superpixel based on a predetermined hierarchical and non-parametric coordinate clustering algorithm and generating, based on the plurality of clusters, new superpixels by dividing the selected additional division target superpixel into at least two superpixels, thereby updating the plurality of superpixels to include the new superpixels.

The annotation device and/or the annotation method according to these aspects may include one or more of the following features:

Based on a user input for new segmentation, the at least one processor may be configured to generate a new segmentation region by merging at least two segmentation regions of the recommended segmentation regions, thereby updating the segmentation regions.

The at least one processor may be configured to modify at least any one segmentation region of the recommended segmentation regions based on a user input for region modification.

The at least one segmentation region may be modified in units of a pixel based on the user input for region modification.

The annotation target image may be a microstructure image generated by photographing a component, in particular by photographing a material of the component, e.g. in a plant.

The annotation device further includes an input/output interface module. The input/output interface module may be configured to display the recommended segmentation regions by overlaying them on the annotation target image.

The displayed recommendation segmentation regions may be updated by a user input for new segmentation.

The performing labeling for each of the segmentation regions may include: generating a new segmentation region by merging at least two segmentation regions of the recommended segmentation regions, based on a user input for new segmentation, thereby updating the segmentation regions.

The annotation method may include modifying at least any one segmentation region of the segmentation regions based on a user input for region modification.

The annotation target image may be a microstructure image generated by photographing a component, e.g. in a plant, in particular by photographing a material of the component. That is, the annotation target image may be an image of a microstructure of a component material. The annotation method may include displaying the recommended segmentation regions by overlaying them on the annotation target image.

### BRIEF DESCRIPTION OF THE DRAWINGS

FIG. 1 is a diagram schematically illustrating a configuration of an annotation device according to an embodiment of the present disclosure.
FIG. 2 is a flowchart for describing an annotation method according to an embodiment of the present disclosure.
FIG. 3 is a flowchart for describing an annotation method according to another embodiment of the present disclosure.
FIG. 4 is a diagram showing exemplarily an annotation target image, annotation, an annotation result screen.
FIG. 5 is a diagram describing the annotation method according to an embodiment of the present disclosure.

### DETAILED DESCRIPTION

Parts that may obscure the crux of the present disclosure may be omitted for a clear description of the present disclosure. The same or similar reference numerals will be assigned to the same or similar components throughout this patent document.

Throughout the specification, when it is mentioned that a portion is "connected" to another portion, it includes not only "is directly connected" but also "indirectly connected" with another element placed therebetween. Meanwhile, in the case where a component is referred to as being "directly connected" to other components, it should be understood that there is no component therebetween unless context clearly indicate otherwise.

When a part is referred to as being "on" another part, it may be directly on the other part, or still another part may be placed between them. In contrast, when a part is referred to as being "directly on" another part, there is no other part between them.

While terms such as first, second, third, etc., are used to describe various parts, components, regions, layers, and/or sections, these terms are not limited thereto. These terms are only used to distinguish one part, component, region, layer or section from another part, component, region, layer or section. The use of such ordinal numbers should not be construed as limiting the meaning of the term. For example, the components associated with such an ordinal number should not be limited in the order of use, placement order, or the like. If necessary, each ordinal number may be used interchangeably. Thus, a first part, component, region, layer or section to be described below can be referred to as a second part, component, region, layer or section without departing from the scope of the present disclosure.

The terminologies used herein are provided for description of only specific embodiments of the present disclosure and are not intended to limit the scope of the present disclosure. Singular forms used herein include plural form thereof unless phrases have the meanings opposite thereto clearly. The meaning of "including" used in this specification embodies specific characteristics, regions, integers, steps, operations, elements, and/or components, and does not exclude the existence or addition of other specific characteristics, regions, integers, steps, operations, elements, and/or components.

Spatially relative terms, such as "under", "over" and the like, may be used to more easily describe a relationship of one portion to another portion shown in the drawing. These terms are intended to include not only meanings intended in the drawing but other meanings or operations of a device in use. For example, if the device is turned upside down in the drawing, a portion described as being "under" other portions is described as being "over" other portions. Thus, the exemplary term "under" includes both an up direction and a down direction according to the context of the description. The device may rotate by 90 degrees or at other angles, and the spatially relative terms are construed accordingly.

Unless otherwise defined, all terms used herein including technical and scientific terms have the same meaning as commonly understood by one of ordinary skill in the art to which the present invention belongs. Commonly used terms defined in the dictionary are additionally construed as having meanings conforming to related technology documents and currently disclosed contents. As long as terms are not clearly defined, the terms should not be ideally or excessively construed as a strictly formal meaning.

Hereafter, an embodiment of the present invention will be described in detail with reference to the accompanying drawings such that those skilled in the art can easily carry out the embodiment. However, the present invention may be embodied in various forms and is not limited to the embodiment described in the present specification.

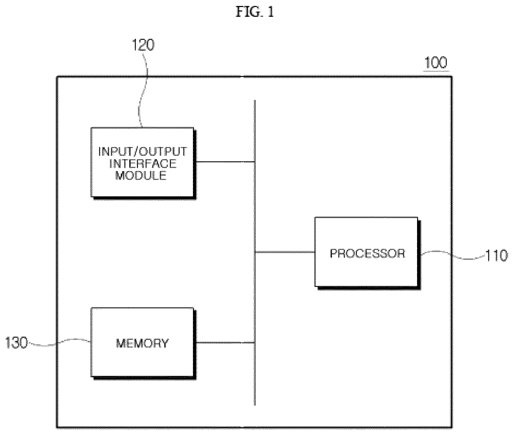

FIG. 1 is a diagram schematically illustrating a configuration of an annotation device according to an embodiment of the present disclosure.

Referring to FIG. 1, an annotation device 100 according to an embodiment includes a processor 110, an input/output interface module 120, and a memory 130.

The processor 110, the input/output interface module 120, and the memory 130 included in the annotation device 100 may be connected to each other by a bus and are capable of transmitting data to each other.

According to various embodiments, the processor 110 may execute programs or instructions stored in the memory 130. Here, an operation program (e.g., OS) for operating the annotation device 100 may be stored in the memory 130.

According to various embodiments, the processor 110 may execute a program for managing information on the annotation device 100 or a program for managing the operation of the annotation device 100, or a program for managing the operation of the input/output interface module 120.

### ① Generating superpixels

According to various embodiments, the processor 110 may obtain or receive an annotation target image through the input/output interface module 120.

The annotation target image may be an image of a material constituting a component of a machine. The annotation target image may be acquired by image capture accomplished using various photographic devices like cameras or scanning the material with optical sensors. The annotation device 100 may further include such photographing device or an optical sensor or may receive the annotation target image from such photographing device or the optical sensor via the input/output interface module 120 or may receive from a user via the input/output interface module 120,

The material of the annotation target image may be a metal material. For example, the material may be a material of any component in a gas turbine or a steam turbine, such as a turbine blade/vane or a compressor blade/vane, or a fuel nozzle or any part of the fuel nozzle. Also, the material may be a material of any component in a reformer such tube (e.g., catalyst tube, connection tube). Also, the material may be a material of any component of heat recovery boiler, such as a connection tube, or a tube sheet. Furthermore, the material may be any material of a plant.

According to an embodiment, the processor 110 may designate every frame from an image obtained via the input/output interface module 120 as the annotation target image.

Then, the processor 110 may perform superpixel segmentation to generate a plurality of superpixels (hereinafter, referred to as "superpixels") in the annotation target image based on a predetermined non-parametric segmentation (hereinafter, referred to as "segmentation") method. The superpixels may be understood as a group of pixels that share common characteristics such as pixel intensity, color, or the brightness. Usually, superpixels have a perceptual meaning since pixels belonging to a given superpixel share similar visual properties. The processor 110 may perform image segmentation to generate the plurality of superpixels from the microstructure images.^{.}

According to an embodiment, the processor 110 may perform superpixel segmentation based on a predetermined non-parametric segmentation method capable of adaptively generating superpixels according to the number of objects included in the annotation target image. Here, the predetermined non-parametric segmentation may be Bayesian Adaptive Superpixel Segmentation, but is not limited thereto.

According to an embodiment, the processor 110 may perform superpixel segmentation based on a predetermined non-parametric segmentation method that does not need to define the number K of superpixels in the annotation target image. Here, the predetermined non-parametric segmentation may be Bayesian Adaptive Superpixel Segmentation, but is not limited thereto.

② Generating new superpixels by dividing an additional division target superpixel. According to an embodiment, the processor 110 may display the generated superpixels through the input/output interface module 120.

Then, the processor 110 may obtain a user input for at least one superpixel among the plurality of superpixels displayed via the input/output interface module 120. This user input may be a touch by a user's finger on any one superpixel among a plurality of displayed superpixels, a touch using a mouse click or a smart pen, etc., but is not limited thereto. Based on the user input, the processor 110 may select the at least one superpixel of the plurality of superpixels and designate it as an additional division target superpixel.

Then, the processor 110 may generate a plurality of clusters by clustering pixels within the selected additional division target superpixel based on a predetermined hierarchical/non-parametric coordinate clustering algorithm. Here, the predetermined hierarchical/non-parametric coordinate clustering algorithm may be HDBSCAN algorithm, but is not limited thereto. The processor 110 may display the plurality of generated clusters via the input/output interface module 120.

Then, the processor 110 may obtain a user input for at least two clusters among the plurality of clusters displayed via the input/output interface module 120. This user input may be a touch by a user's finger on any two clusters of the plurality of displayed clusters, a touch using a mouse click or a smart pen, etc., but is not limited thereto.

Based on the user input, the processor 110 may create a new merged cluster by merging at least two clusters of the plurality of clusters. The processor 110 may display the new merged cluster via the input/output interface module 120.

Based on the plurality of clusters including the new merged cluster, the processor 110 may generate new superpixels by dividing the selected additional division target superpixel into at least two superpixels.

### ③ Recommending segmentation region

According to an embodiment, the processor 110 may obtain an outline of each of the plurality of superpixels. The processor 110 may recommend a segmentation region corresponding to each of the plurality of superpixels based on the outlines by displaying each segmentation region via the input/output interface module 120. The processor 110 may display the recommended segmentation region corresponding to each of the plurality of superpixels by overlaying it onto the annotation target image via the input/output interface 120.

According to various embodiments, the processor 110 may display the segmentation region on the annotation target image by adjusting the saturation or brightness of each segmentation region such that the recommended segmentation corresponding to each of the plurality of superpixels displayed on the input/output interface module 120 is distinguished and differentiated, and the display can be made distinctive.

### ④ Performing labeling for each segmentation region

According to an embodiment, the processor 110 may obtain a user input for at least two segmentation regions among the multiple segmentation regions. The multiple segmentation regions correspond respectively to the plurality of superpixels that are displayed by being overlayed on the annotation target image via the input/output interface module 120. Here, the user input may be a touch by a user's finger on at least two segmentation regions among the multiple segmentation regions corresponding respectively to the plurality of superpixels, a touch using a mouse click or a smart pen, etc., but is not limited thereto.

According to an embodiment, the processor 110 may generate a new merged segmentation region by merging the at least two segmentation regions corresponding to the user input. The at least two segmentation regions may be segmentation regions that correspond to a same class, but are not limited thereto. Thus, the processor 110 may generate the new merged segmentation region by merging the segmentation regions of the same class, based on the user input.

According to various embodiments, the processor 110 may determine a label for each recommended segmentation region. Specifically, the processor 110 may perform labeling for each recommended segmentation region based on a user input to the input/output interface module 120.

According to an embodiment, the processor 110 may determine a label for the newly generated segmentation region. The processor 110 may perform labeling for the newly generated segmentation region based on the user input to the input/output interface module 120. The processor 110 may determine a label for the new segmentation region generated by merging the segmentation regions of the same class. More specifically, the processor 110 may perform labeling for the segmentation region generated by merging the segmentation regions of the same class based on the user input to the input/output interface module 120.

### ⑤ Modifying segmentation region

According to an embodiment, the processor 110 may obtain a user input on at least one segmentation region for which labeling has been performed through the input/output interface module 120. The user input may be a touch by a user's finger on at least one segmentation region, a touch using a mouse click or a smart pen, etc., but is not limited thereto.

According to various embodiments, the processor 110 may modify at least one segmentation region based on the user input selecting the at least one segmentation region. Specifically, the processor 110 may modify at least one segmentation region in units of a pixel (e.g., modifying a micro region) based on the user input.

The input/output interface module 120 may be connected to an external device (e.g., a server) through a network.

The input/output interface module 120 may obtain data from an external device. The input/output interface module 120 may obtain the annotation target image.

The input/output interface module 120 may display the annotation target image. The input/output interface module 120 may display the superpixels. The input/output interface module 120 may display the clusters. The input/output interface module 120 may display the segmentation region. The input/output interface module 120 may display a result of labeling performed on the segmentation region.

The input/output interface module 120 may obtain the user input.

The input/output interface module 120 may be integrally provided with the annotation device. The input/output interface module 120 may be provided separately from the annotation device. The input/output interface module 120 may be a separate device to be communicatively connected to the annotation device. The input/output interface module 120 may include a port (e.g., a USB port) for connection with an external device. The input/output interface module 120 may include a monitor, a touch screen, a mouse, an electronic pen, a microphone, a keyboard, a speaker, an earphone, a headphone, or a touch pad.

The memory 130 may store the annotation target image obtained through the input/output interface module 120. The memory 130 may store the superpixels generated by the processor 110. The memory 130 may store the clusters generated by the processor 110. The memory 130 may store the segmentation region generated by the processor 110. The memory 130 may store annotation results.

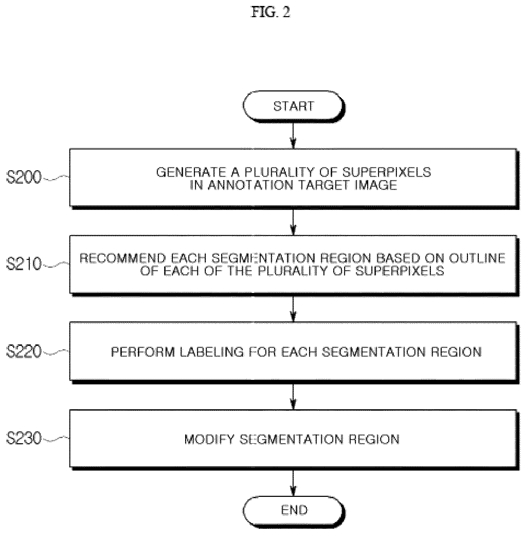

FIG. 2 is a flowchart for describing an annotation method according to an embodiment of the present disclosure.

Referring to FIG. 2, the annotation method includes: generating a plurality of superpixels in the annotation target image (S200); recommending each segmentation region based on an outline of each of the plurality of superpixels (S210); performing labeling for each segmentation region (S220); and modifying the segmentation region (S230).

In step S200, the annotation device may perform superpixel segmentation based on a predetermined non-parametric segmentation method capable of adaptively generating superpixels according to the number of objects included in the annotation target image. Here, the predetermined non-parametric segmentation may be Bayesian Adaptive Superpixel Segmentation, but is not limited thereto.

According to an embodiment, the annotation device may perform superpixel segmentation based on a predetermined non-parametric segmentation method that does not need to define the number K of superpixels. The predetermined non-parametric segmentation may be Bayesian Adaptive Superpixel Segmentation, but is not limited thereto. Thereby, the annotation device may adaptively generate the plurality of superpixels according to the number of objects included in the annotation target image.

In step S210, the annotation device may obtain an outline of each of the plurality of superpixels. The annotation device may also recommend a segmentation region corresponding to each of the plurality of superpixels based on the outline of each of the plurality of superpixels. Furthermore, the annotation device may display the recommended segmentation region corresponding to each of the plurality of superpixels by overlaying it on the annotation target image.

In step S220, the annotation device may determine a label for each recommended segmentation region. Specifically, the annotation device may perform labeling for each recommended segmentation region based on the user input.

In step S230, the annotation device may modify at least one segmentation region based on a user input selecting at least one segmentation region. Specifically, the annotation device may modify the at least one segmentation region in units of a pixel (modify a micro region) based on the user input.

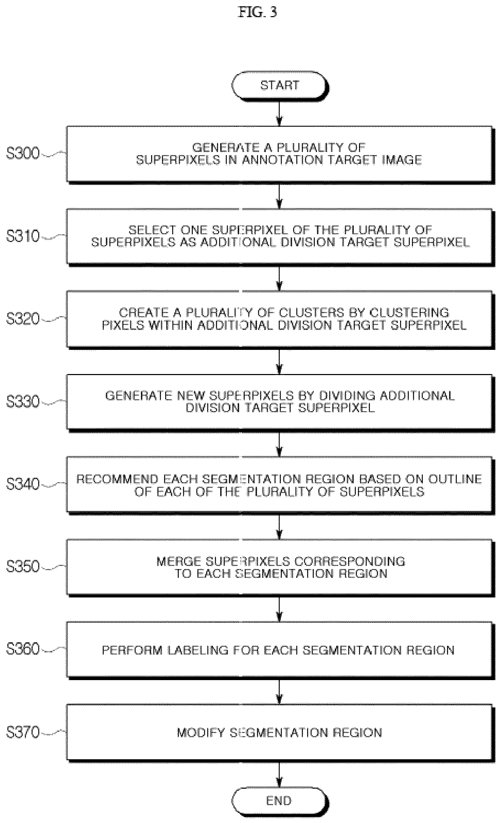

FIG. 3 is a flowchart for describing an annotation method according to another embodiment of the present disclosure.

Referring to FIG. 3, the annotation method includes: generating a plurality of superpixels in the annotation target image (S300); selecting one superpixel of the plurality of superpixels as an additional division target superpixel (S310); creating a plurality of clusters by clustering pixels within the additional division target superpixel (S320); generating new superpixels by dividing the additional division target superpixel (S330); recommending each segmentation region based on an outline of each of the plurality of superpixels (S340); merging the superpixels corresponding to each segmentation region (S350); performing labeling for each segmentation region (S360); and modifying the segmentation region (S370).

In step S300, the annotation device may perform superpixel segmentation based on the predetermined non-parametric segmentation method capable of adaptively generating superpixels according to the number of objects included in the annotation target image. Here, the predetermined non-parametric segmentation may be Bayesian Adaptive Superpixel Segmentation, and is not limited thereto.

The annotation target image may be an image of a material constituting a component of a machine. The material of the annotation target image may be a metal material. For example, the material may be a material of any component in a gas turbine or a steam turbine, such as a turbine blade/vane or a compressor blade/vane, or a fuel nozzle or any part of the fuel nozzle. Also, the material may be a material of any component in a reformer such as a tube (e.g., catalyst tube, connection tube). Also, the material may be a material of any component of heat recovery boiler, such as a connection tube, or a tube sheet. Furthermore, the material may be any material of a plant.

In step S300, the annotation device may perform superpixel segmentation based on a predetermined non-parametric segmentation method that does not need to define the number K of superpixels. Here, the predetermined non-parametric segmentation may be Bayesian Adaptive Superpixel Segmentation, and is not limited thereto. Thereby, the annotation device may adaptively and automatically generate the plurality of superpixels according to the number of objects included in the annotation target image.

The superpixels may be understood as a group of pixels that share common characteristics such as pixel intensity, color, or the brightness. Usually, superpixels have a perceptual meaning since pixels belonging to a given superpixel share similar visual properties. The processor 110 may perform image segmentation to generate the plurality of superpixels from the microstructure images.

In step S310, the annotation device may display the generated superpixels. In step S310, based on a user input, the annotation device selects at least one superpixel of the plurality of superpixels as an additional division target superpixel.

In step S320, the annotation device creates a plurality of clusters by clustering pixels within the selected additional division target superpixel based on a predetermined hierarchical/non-parametric coordinate clustering algorithm. Here, the predetermined hierarchical/non-parametric coordinate clustering algorithm may be HDBSCAN algorithm, but is not limited thereto. The annotation device may also display the plurality of generated clusters.

In step S330, based on a user input, the annotation device may create a new cluster by merging at least two clusters of the plurality of clusters selected by the user input. Based on the plurality of clusters, which may include the newly created cluster, the annotation device generates a new set of superpixels by dividing the selected additional division target superpixel into at least two superpixels.

In step S340, the annotation device may obtain an outline of each of the plurality of superpixels, which is the new set of superpixels generated by step S330. Then, the annotation device may recommend a segmentation region corresponding to each of the plurality of superpixels based on the outline of each of the plurality of superpixels. The annotation device may display the recommended segmentation region corresponding to each of the plurality of superpixels by overlying it on the annotation target image and display it. The segmentation regions may be displayed together with the outline of each of the plurality of superpixels.

In step S350, the annotation device may generate a new segmentation region by merging the at least two segmentation regions corresponding to a user input selecting the at least two segmentation regions. Here, the at least two segmentation regions may be segmentation regions corresponding to a same class, but are not limited thereto. Thereby, the annotation device may determine a new segmentation region by merging the at least two segmentation regions of the same class based on the user input. Thereby, the annotation device may update the segmentation regions for the annotation target image to include the new segmentation region.

In step S360, the annotation device may determine a label for each recommended segmentation region. Specifically, the annotation device may perform labeling for each recommended segmentation region based on a user input.

In step S370, the annotation device may modify at least one segmentation region based on a user input selecting at least one segmentation region to be modified. Specifically, the annotation device may modify the at least one segmentation region, selected by the user input, in units of a pixel (e.g., modifying a micro region) based on the user input.

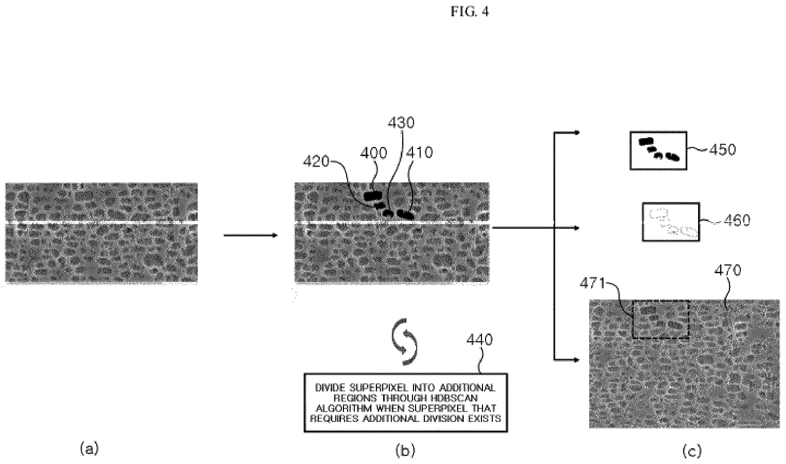

FIG. 4 is a diagram exemplarily showing the annotation target image, annotation, an annotation result screen.

Referring to (a) of FIG. 4, a plurality of objects may be included in the annotation target image. The size and the shape of each of the plurality of objects included in the annotation target image may be different.

Referring to (b) of FIG. 4, the annotation device may generate superpixels 400, 410, 420, and 430 from the annotation target image. Then, the annotation device may overlay the generated superpixels 400, 410, 420, and 430 on the annotation target image and display them via the input/output interface module 120.

According to an embodiment, the annotation device may display superpixels of the same class in the same color (e.g., black (400 and 410), red (420 and 430), etc.). According to an embodiment, the annotation device may label the superpixels of the same class with the same class.

Also, if there is a superpixel (not shown) that requires additional division among the generated superpixels or a user select a superpixel among the generated superpixles as a to-be-divided superpixel, the annotation device may divide the superpixel into at least two regions through an algorithm such as HDBSCAN algorithm. The at least two regions generated by dividing a superpixel may be considered as new superpixels.

Referring to (c) of FIG. 4, the annotation device may display an annotation result screen. Specifically, the annotation device may display a filled annotation result screen 450 and/or an annotation result screen 460 indicated only by outlines, respectively. As shown in the filled annotation result screen 450, the superpixels may be shown as filled-in objects. On the other hand, as shown in the annotation result screen 460, the superpixels may be shown only by outlines. Furthermore, as shown in (c) of FIG. 4, the annotation result 471 may be displayed by being overlayed on the annotation target image 470.

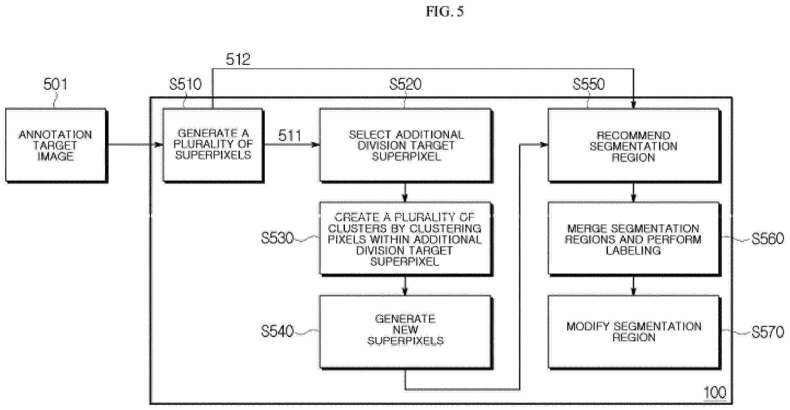

FIG. 5 is a diagram describing the annotation method according to the embodiment of the present disclosure.

Referring to FIG. 5, the annotation device may obtain an annotation target image 501 and generate a plurality of superpixels (S510).

According to an embodiment, when it is determined that there is a superpixel that requires additional division (511), the annotation device may select, based on a user input, at least one superpixel of the plurality of superpixels and designate it as the additional division target superpixel (S520).

Then, the annotation device may create a plurality of clusters by clustering pixels within the additional division target superpixel, for example by using HDBSCAN algorithm as a hierarchical/non-parametric coordinate clustering algorithm (S530).

Based on the plurality of clusters, the annotation device generates new superpixels by dividing the selected additional division target superpixel into at least two superpixels (S540). Thereby, the annotation device may update the set of superpixels.

When the superpixels are determined, the annotation device may recommend each segmentation region based on an outline of each of the plurality of superpixels (S550).

According to an embodiment, when it is determined that there is no superpixel that requires additional division (512), the annotation device may skip steps S520, S530, and S540 and proceed from step 510 directly to step S550. That is, the annotation device may recommend each segmentation region based on the contour of each initially generated superpixel (S550).

According to an embodiment, the annotation device may generate a new segmentation region by merging at least two of the recommended segmentation regions based on a user input, and may perform labeling for the generated segmentation region including the merged region (S560).

Then, the annotation device may modify at least one segmentation region based on the user input selecting at least one segmentation region (S570).

Although the present invention has been described with reference to the embodiments shown in the drawings, these are just examples and it will be understood by those skilled in the art that various modifications and equivalent thereto may be made. Also, it is noted that any one feature of an embodiment of the present disclosure described in the specification may be applied to another embodiment of the present disclosure. Therefore, the technical scope of the present invention should be determined by the spirit of the appended claims.

According to the embodiment of the present disclosure, a technical advantage is achieved through adaptively recommending of the segmentation regions according to the number of objects within an image. Also, when the generated superpixel requires additional division, it is possible to generate a new superpixel by dividing the existing superpixel by coordinate clustering. Furthermore, the generated superpixels can be merged according to a user input.

According to an embodiment, the annotation target image may be a microstructure image of a material and objects in the annotation image may be microstructures in the microstructure image of the material. Thus, according to an embodiment, the microstructures in the material are adaptively and automatically identified by using superpixels and segmentation based such superpixels. Furthermore, the superlixels and segmentation of the microstructure image are optimized by user inputs. This reduces human effort and time for annotation operation (e.g., labeling) on objects in the annotation target image.

Also, the annotation device may display the annotation target image with annotations via the input/output interface module 120. The annotations to the annotation target image may include labels given to each of the segmentation regions in the annotation target image.

The images of a material annotated according to the present disclosure may be used to evaluate or determine the strength status and/or remaining lifetime of the material. Specifically, when the annotation target image is a microstructure image of a material of a component in a plant, such as blades/vanes in a gas turbine or tubes/pipes in heat recovery system or reforms, a system may determine a strength status and/or remaining lifetime value of the component and may provide an alert signal based on the determined strength status and/or the remaining lifetime value of the material. Since the annotation device according to the present disclosure allows efficient annotation of an image (e.g., a microstructure image), the determination of the strength status and/or remaining lifetime value may be performed with higher efficiency and accuracy.

## Claims

1. An annotation device (100), comprising:
at least one processor (110), and memory (130) on which a program is stored,
wherein the at least one processor (110) is configured to, when executing instructions in the program:
generate (S200, S300, S510) a plurality of superpixels (400, 410, 420, 430) in an annotation target image (470, 501) based on a predetermined non-parametric segmentation method,
select (S310, S520), based on a user input for superpixel selection, at least one superpixel of the plurality of generated superpixels as an additional division target superpixel,
generate (S320, S530) a plurality of clusters by clustering pixels within the selected additional division target superpixel based on a predetermined hierarchical and non-parametric coordinate clustering algorithm,
generate (S330, S540), based on the plurality of clusters, new superpixels by dividing the selected additional division target superpixel into at least two superpixels thereby updating the plurality of superpixels to include the new superpixels,
recommend (S210, S340, S550) segmentation regions based on outlines of the plurality of superpixels, respectively, and
perform (S220, S360, S560) labeling for each of the recommended segmentation regions based on a user input for labeling.

2. The annotation device of claim 1, wherein, based on a user input for new segmentation, the at least one processor (110) is further configured to generate a new segmentation region by merging (S350, S560) at least two segmentation regions of the recommended segmentation regions, thereby updating the segmentation regions.

3. The annotation device according to any one of the preceding claims, wherein, based on a user input for region modification, the at least one processor (110) is further configured to modify (S230, S570) at least any one segmentation region of the recommended segmentation regions.

4. The annotation device of claim 3, wherein the at least one segmentation region is modified in units of a pixel based on the user input for region modification.

5. The annotation device according to any one of the preceding claims, wherein the annotation target image (470, 501) is a microstructure image generated by photographing of a material of a component in a plant.

6. The annotation device according to any one of the preceding claims, further comprising an input/output interface module,
wherein the input/output interface module is configured to display the recommended segmentation regions by overlaying them on the annotation target image (470, 501).

7. An annotation method comprising:
generating (S200, S300, S510) a plurality of superpixels in an annotation target image based on a predetermined non-parametric segmentation method;
selecting (S310, S520), based on a user input for superpixel selection, at least one superpixel of the plurality of generated superpixels as an additional division target superpixel;
generating (S320, S530) a plurality of clusters by clustering pixels within the selected additional division target superpixel based on a predetermined hierarchical and non-parametric coordinate clustering algorithm;
generating (S330, S540), based on the plurality of clusters, new superpixels by dividing the selected additional division target superpixel into at least two superpixels, thereby updating the plurality of superpixels to include the new superpixels;
recommending (S210, S340, S550) segmentation regions based on outlines of the plurality of superpixels, respectively; and
performing (S220, S360, S560) labeling for each of the recommended segmentation regions based on a user input for labeling.

8. The annotation method of claim 7, wherein the performing labeling for each of the segmentation regions comprises generating a new segmentation region by merging (S350, S560) at least two segmentation regions of the recommended segmentation regions, based on a user input for new segmentation, thereby updating the segmentation regions.

9. The annotation method of claim 7 or 8, further comprising modifying at least any one segmentation region of the segmentation regions based on a user input for region modification.

10. The annotation method of claim 9, wherein the at least one segmentation region is modified in units of a pixel based on the user input for region modification.

11. The annotation method according to any one of claims 7 to 10, wherein the annotation target image (470, 501) is a microstructure image generated by photographing of a material of a component in a plant.

12. The annotation method according to any one of claims 7 to 11, further comprising:
displaying the recommended segmentation regions by overlaying them on the annotation target image.

13. A recording medium that is readable by a computer in which a program for performing the method according to any one of claims 7 to 12 is recorded.

## Patentansprüche

1. Anmerkungsvorrichtung (100), die umfasst:
mindestens einen Prozessor (110) und einen Speicher (130), in dem ein Programm gespeichert ist,
wobei der mindestens eine Prozessor (110) dann, wenn er Anweisungen in dem Programm ausführt, konfiguriert ist zum:
Erzeugen (S200, S300, S510) mehrerer Superpixel (400, 410, 420, 430) in einem Anmerkungszielbild (470, 501) anhand eines vorgegebenen nicht parametrischen Segmentationsverfahrens,
Auswählen (S310, S520) anhand einer Anwendereingabe für eine Superpixelauswahl mindestens eines Superpixels der mehreren erzeugten Superpixel als ein zusätzliches Divisionszielsuperpixel,
Erzeugen (S320, S530) mehrerer Cluster durch Clustern von Pixeln innerhalb des ausgewählten zusätzlichen Divisionszielsuperpixels anhand eines vorgegebenen hierarchischen und nicht parametrischen Koordinatenclusteralgorithmus,
Erzeugen (S330, S540) anhand der mehreren Cluster neuer Superpixel durch Unterteilen der ausgewählten zusätzlichen Divisionszielsuperpixel in mindestens zwei Superpixel, wodurch die mehreren Superpixel aktualisiert werden, um die neuen Superpixel zu enthalten,
Empfehlen (S210, S340, S550) von Segmentationsbereichen jeweils anhand von Umrissen der mehreren Superpixel und
Ausführen (S220, S360, S560) einer Etikettierung für jeden der empfohlenen Segmentationsbereiche anhand einer Anwendereingabe zum Etikettieren.

2. Anmerkungsvorrichtung nach Anspruch 1, wobei anhand einer Anwendereingabe für eine neue Segmentation der mindestens eine Prozessor (110) ferner konfiguriert ist, einen neuen Segmentationsbereich durch Vereinigen (S350, S560) mindestens zweier Segmentationsbereiche der empfohlenen Segmentationsbereiche zu erzeugen, wodurch die Segmentationsbereiche aktualisiert werden.

3. Anmerkungsvorrichtung nach einem der vorhergehenden Ansprüche, wobei anhand einer Anwendereingabe für eine Bereichsänderung der mindestens eine Prozessor (110) ferner konfiguriert ist, mindestens einen Segmentationsbereich der empfohlenen Segmentationsbereiche zu ändern (S230, S570).

4. Anmerkungsvorrichtung nach Anspruch 3, wobei der mindestens eine Segmentationsbereich in Einheiten eines Pixels anhand der Anwendereingabe für eine Bereichsänderung geändert wird.

5. Anmerkungsvorrichtung nach einem der vorhergehenden Ansprüche, wobei das Anmerkungszielbild (470, 501) ein Mikrostrukturbild ist, das durch Fotografieren eines Materials einer Komponente in einer Anlage erzeugt wird.

6. Anmerkungsvorrichtung nach einem der vorhergehenden Ansprüche, die ferner ein Eingabe-/Ausgabe-Schnittstellenmodul umfasst,
wobei das Eingabe-/Ausgabe-Schnittstellenmodul konfiguriert ist, die empfohlenen Segmentationsbereiche anzuzeigen, indem es sie mit dem Anmerkungszielbild (470, 501) überlagert.

7. Anmerkungsverfahren, das umfasst:
Erzeugen (S200, S300, S510) mehrerer Superpixel (400, 410, 420, 430) in einem Anmerkungszielbild anhand eines vorgegebenen nicht parametrischen Segmentationsverfahrens;
Auswählen (S310, S520) anhand einer Anwendereingabe für eine Superpixelauswahl mindestens eines Superpixels der mehreren erzeugten Superpixel als ein zusätzliches Divisionszielsuperpixel;
Erzeugen (S320, S530) mehrerer Cluster durch Clustern von Pixeln innerhalb des ausgewählten zusätzlichen Divisionszielsuperpixels anhand eines vorgegebenen hierarchischen und nicht parametrischen Koordinatenclusteralgorithmus;
Erzeugen (S330, S540) anhand der mehreren Cluster neuer Superpixel durch Unterteilen der ausgewählten zusätzlichen Divisionszielsuperpixel in mindestens zwei Superpixel, wodurch die mehreren Superpixel aktualisiert werden, um die neuen Superpixel zu enthalten;
Empfehlen (S210, S340, S550) von Segmentationsbereichen jeweils anhand von Umrissen der mehreren Superpixel; und
Ausführen (S220, S360, S560) einer Etikettierung für jeden der empfohlenen Segmentationsbereiche anhand einer Anwendereingabe zum Etikettieren.

8. Anmerkungsverfahren nach Anspruch 7, wobei
das Ausführen einer Etikettierung für jeden der Segmentationsbereiche umfasst, einen neuen Segmentationsbereich durch Vereinigen (S350, S560) mindestens zweier Segmentationsbereiche der empfohlenen Segmentationsbereiche anhand einer Anwendereingabe für eine neue Segmentation zu erzeugen, wodurch die Segmentationsbereiche aktualisiert werden.

9. Anmerkungsverfahren nach Anspruch 7 oder 8, das ferner umfasst, mindestens einen Segmentationsbereich der Segmentationsbereiche anhand einer Anwendereingabe für eine Bereichsänderung zu ändern.

10. Anmerkungsverfahren nach Anspruch 9, wobei der mindestens eine Segmentationsbereich in Einheiten eines Pixels anhand der Anwendereingabe für eine Bereichsänderung geändert wird.

11. Anmerkungsverfahren nach einem der Ansprüche 7 bis 10, wobei das Anmerkungszielbild (470, 501) ein Mikrostrukturbild ist, das durch Fotografieren eines Materials einer Komponente in einer Anlage erzeugt wird.

12. Anmerkungsverfahren nach einem der Ansprüche 7 bis 11, das ferner umfasst:
Anzeigen der empfohlenen Segmentationsbereiche, indem sie auf das Anmerkungszielbild überlagert werden.

13. Aufzeichnungsmedium, das durch einen Computer lesbar ist, in dem ein Programm zum Ausführen des Verfahrens nach einem der Ansprüche 7 bis 12 aufgezeichnet ist.

## Revendications

1. Dispositif d'annotation (100), comportant :
au moins un processeur (110), et une mémoire (130) sur laquelle un programme est stocké,
dans lequel le au moins un processeur (110) est configuré pour, lors de l'exécution d'instructions dans le programme :
générer (S200, S300, S510) une pluralité de superpixels (400, 410, 420, 430) dans une image cible d'annotation (470, 501) sur la base d'un procédé de segmentation non paramétrique prédéterminé,
sélectionner (S310, S520), sur la base d'une entrée d'utilisateur destinée à une sélection de superpixels, au moins un superpixel de la pluralité de superpixels générés en tant que superpixel cible de division supplémentaire,
générer (S320, S530) une pluralité de grappes en regroupant des pixels à l'intérieur du superpixel cible de division supplémentaire sélectionné, sur la base d'un algorithme de regroupement de coordonnées non paramétrique et hiérarchique prédéterminé,
générer (S330, S540), sur la base de la pluralité de grappes, de nouveaux superpixels en divisant le superpixel cible de division supplémentaire sélectionné en au moins deux superpixels, en mettant ainsi à jour la pluralité de superpixels pour inclure les nouveaux superpixels,
recommander (S210, S340, S550) des régions de segmentation sur la base de contours de la pluralité de superpixels, respectivement, et
réaliser (S220, S360, S560) un étiquetage pour chacune des régions de segmentation recommandées sur la base d'une entrée d'utilisateur destinée à un étiquetage.

2. Dispositif d'annotation selon la revendication 1, dans lequel, sur la base d'une entrée d'utilisateur destinée à une nouvelle segmentation, le au moins un processeur (110) est en outre configuré pour générer une nouvelle région de segmentation en fusionnant (S350, S560) au moins deux régions de segmentation des régions de segmentation recommandées, en mettant ainsi à jour les régions de segmentation.

3. Dispositif d'annotation selon l'une quelconque des revendications précédentes, dans lequel, sur la base d'une entrée d'utilisateur destinée à une modification de région, le au moins un processeur (110) est en outre configuré pour modifier (S230, S570) au moins une région de segmentation quelconque des régions de segmentation recommandées.

4. Dispositif d'annotation selon la revendication 3, dans lequel la au moins une région de segmentation est modifiée en unités d'un pixel sur la base de l'entrée d'utilisateur destinée à une modification de région.

5. Dispositif d'annotation selon l'une quelconque des revendications précédentes, dans lequel l'image cible d'annotation (470, 501) est une image de microstructure générée en photographiant un matériau d'un composant dans une installation.

6. Dispositif d'annotation selon l'une quelconque des revendications précédentes, comportant en outre un module d'interface d'entrée/sortie,
dans lequel le module d'interface d'entrée/sortie est configuré pour afficher les régions de segmentation recommandées en les superposant sur l'image cible d'annotation (470, 501).

7. Procédé d'annotation comportant les étapes consistant à :
générer (S200, S300, S510) une pluralité de superpixels dans une image cible d'annotation sur la base d'un procédé de segmentation non paramétrique prédéterminé ;
sélectionner (S310, S520), sur la base d'une entrée d'utilisateur destinée à une sélection de superpixels, au moins un superpixel de la pluralité de superpixels générés en tant que superpixel cible de division supplémentaire ;
générer (S320, S530) une pluralité de grappes en regroupant des pixels à l'intérieur du superpixel cible de division supplémentaire sélectionné, sur la base d'un algorithme de regroupement de coordonnées non paramétrique et hiérarchique prédéterminé ;
générer (S330, S540), sur la base de la pluralité de grappes, de nouveaux superpixels en divisant le superpixel cible de division supplémentaire sélectionné en au moins deux superpixels, en mettant ainsi à jour la pluralité de superpixels pour inclure les nouveaux superpixels ;
recommander (S210, S340, S550) des régions de segmentation sur la base de contours de la pluralité de superpixels, respectivement ; et
réaliser (S220, S360, S560) un étiquetage pour chacune des régions de segmentation recommandées sur la base d'une entrée d'utilisateur destinée à un étiquetage.

8. Procédé d'annotation selon la revendication 7, dans lequel la réalisation de l'étiquetage pour chacune des régions de segmentation comporte de générer une nouvelle région de segmentation en fusionnant (S350, S560) au moins deux régions de segmentation des régions de segmentation recommandées, sur la base d'une entrée d'utilisateur destinée à une nouvelle segmentation, en mettant ainsi à jour les régions de segmentation.

9. Procédé d'annotation selon la revendication 7 ou 8, comportant en outre de modifier au moins une région de segmentation quelconque des régions de segmentation sur la base d'une entrée d'utilisateur destinée à une modification de région.

10. Procédé d'annotation selon la revendication 9, dans lequel la au moins une région de segmentation est modifiée en unités d'un pixel sur la base de l'entrée d'utilisateur destinée à une modification de région.

11. Procédé d'annotation selon l'une quelconque des revendications 7 à 10, dans lequel l'image cible d'annotation (470, 501) est une image de microstructure générée en photographiant un matériau d'un composant dans une installation.

12. Procédé d'annotation selon l'une quelconque des revendications 7 à 11, comportant en outre de :
afficher les régions de segmentation recommandées en les superposant sur l'image cible d'annotation.

13. Support d'enregistrement qui est lisible par un ordinateur dans lequel est enregistré un programme pour mettre en œuvre le procédé selon l'une quelconque des revendications 7 à 12.
